# EUROPÄISCHE PATENTSCHRIFT

(11) **EP 1 131 878 B1**
(45) Veröffentlichungstag und Bekanntmachung des Hinweises auf die Patenterteilung: **20.06.2007**
(21) Anmeldenummer: 00963885.9
(22) Anmeldetag: 08.08.2000
(51) Int. Cl.: H02K 5/124

(54) **ELEKTRISCHE MASCHINE MIT RINGSPALTDICHTUNG**
ELECTRIC MACHINE WITH AN ANNULAR GAP SEAL
MACHINE ELECTRIQUE AVEC JOINT DE FENTE ANNULAIRE

(30) Priorität: 17.09.1999 DE 19944557
(43) Veröffentlichungstag der Anmeldung: 12.09.2001
(73) Patentinhaber: ROBERT BOSCH GMBH, 70442 Stuttgart (DE)
(72) Erfinder: PFLUEGER, Gerhard, 71706 Markgroeningen (DE); LENGENFELDER, Thomas, 71229 Leonberg (DE); WOLF, Erich, 71665 Vaihingen (DE); GOTTFRIED, Wolfgang, 74182 Obersulm (DE)
(86) Internationale Anmeldenummer: PCT/DE2000/002635
(87) Internationale Veröffentlichungsnummer: WO 2001/022559

(56) Entgegenhaltungen:
- EP-A- 0 746 080
- DE-A- 2 362 636
- PATENT ABSTRACTS OF JAPAN vol. 012, no. 177 (E-613), 25. Mai 1988 (1988-05-25) & JP 62 285641 A (HITACHI LTD), 11. Dezember 1987 (1987-12-11)
- PATENT ABSTRACTS OF JAPAN vol. 1995, no. 04, 31. Mai 1995 (1995-05-31) & JP 07 007880 A (HITACHI LTD), 10. Januar 1995 (1995-01-10)

## Beschreibung

### Stand der Technik

Die Erfindung betrifft eine elektrische Maschine, insbesondere Generator gemäß der Gattung des unabhängigen Anspruchs.

Die DE-A-2362636 und JP-A-07007880 offenbaren jeweils eine elektrische Maschine entsprechend dem Stand der Technik.

Aus der WO 99/17430 ist ein Generator mit einer Ringspaltdichtung bekannt. Ein Distanzstück zwischen einer Riemenscheibe und einem Wälzlager ist dabei so angeordnet, daß es mit einem an der Nabe befestigten Teil einen Ringspalt bildet. Dieser Ringspalt weist allerdings eine nur beschränkte Dichtwirkung auf. Diese Ringspaltdichtung ist lediglich in der Lage größere Partikel daran zu hindern in den Raum zwischen Distanzstück und Wälzlager einzudringen. Aus dieser beschränkten Dichtwirkung ergibt sich der Nachteil, daß diese Ringspaltdichtung keine Dichtwirkung gegenüber Flüssigkeiten und kleineren Partikeln aufweist.

### Vorteile der Erfindung

Mit der erfindungsgemäßen elektrischen Maschine mit den Merkmalen des unabhängigen Anspruchs ist es möglich, die Ringspaltdichtung so zu gestalten, daß sie auch gegenüber Flüssigkeiten und kleineren Partikeln eine Dichtwirkung aufweist. Die verbesserte Ringspaltdichtung schützt das bereits durch Dichtscheiben abgedichtete Wälzlager und damit zusätzlich vor dem schädlichen Einfluß von Flüssigkeiten. Dies ist insbesondere dann von Vorteil, wenn das Fahrzeug, welches die erfindungsgemäße elektrische Maschine aufweist, eine sogenannte Watfähigkeit aufweisen muß und damit auch für das Durchfahren überfluteter Wege geeignet sein soll.

Durch die in den Unteransprüchen aufgeführten Maßnahmen ergeben sich vorteilhafte Weiterbildungen und Verbesserungen der im unabhängigen Anspruch angegebenen Merkmale.

### Zeichnungen

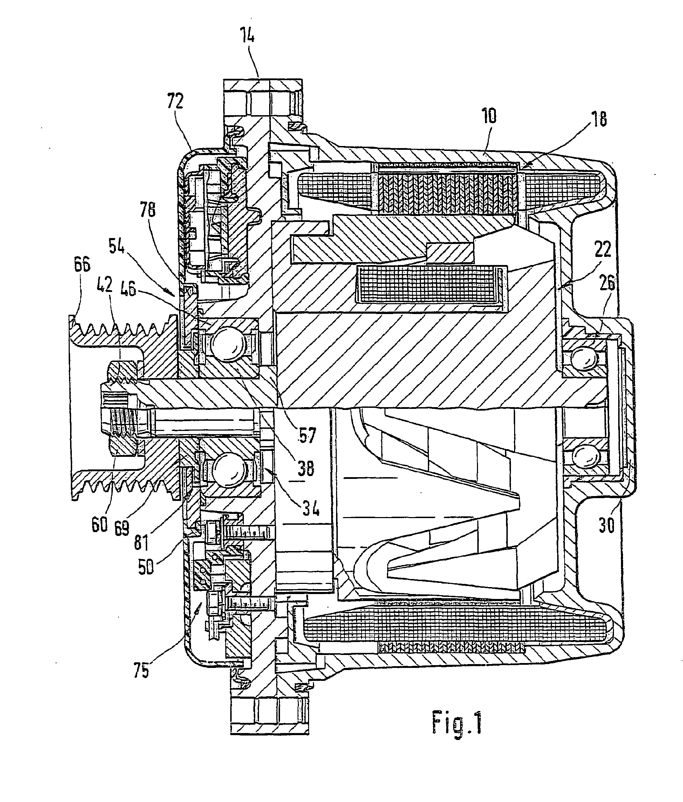

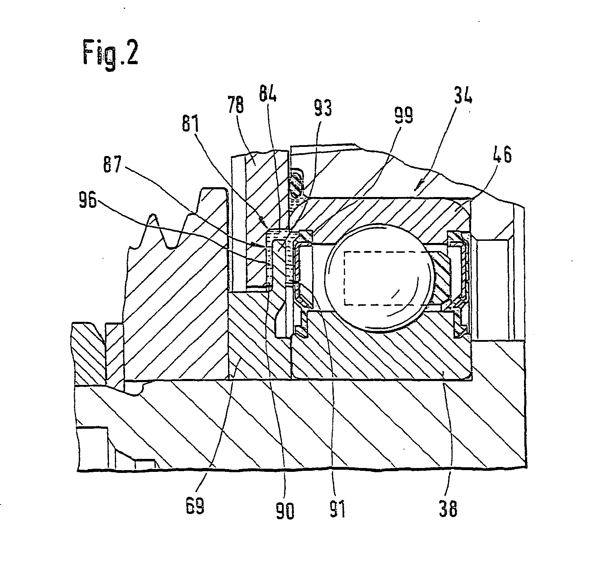

Die Erfindung wird nachstehend in einem Ausführungsbeispiel anhand der zugehörigen Zeichnungen näher erläutert. Figur 1 zeigt einen Längsschnitt durch die erfindungsgemäße elektrische Maschine, wobei in der oberen Bildhälfte ein Rotor der Maschine geschnitten und in der unteren Bildhälfte der Rotor in einer Seitenansicht dargestellt ist; Figur 2 zeigt einen Schnitt durch eine erfindungsgemäße Ringspaltdichtung.

Identische bzw. gleichwirkende Bauteile sind mit gleichen Bezugszahlen bezeichnet.

### Beschreibung des Ausführungsbeispiels

Figur 1 zeigt in der oberen Bildhälfte einen Längsschnitt durch die erfindungsgemäße elektrische Maschine. Die elektrische Maschine, hier in der Bauform eines Generators, weist ein topfförmiges Gehäuse 10 auf, das durch einen Gehäusedeckel 14 verschlossen ist. Innerhalb des topfförmigen Gehäuses 10 ist ein Stator 18 befestigt, der einen Rotor 22 umgibt. Der Rotor 22 ist einerseits über ein Lager 26 im Gehäuseboden 30 und andererseits über ein Wälzlager 34 im Gehäusedeckel 14 gelagert. Das Wälzlager 34 stützt sich dabei mit einem wellenseitigen Lagerring 38 auf einer Rotorwelle 42 ab. Nabenseitig stützt sich das Wälzlager 34 über einen nabenseitigen Lagerring 46 im Gehäusedeckel 14 ab. Der Gehäusedeckel 14 bildet dabei mit einer Schulter 50 eine Nabe 54. Die axiale Lage des wellenseitigen Lagerrings 38 wird durch einen Wellenbund 57 begrenzt, an den der wellenseitige Lagerring 38 mittels einer Schraubenmutter 60 über einen Bund 63 einer Riemenscheibe 66 und ein zwischen Bund 63 und Lagerring 38 angeordnetes erstes Bauteil 69 gesichert ist. Das erste Bauteil 69 ist mit der Welle 42 drehfest verbunden. Nabenseitig deckt eine Abdeckkappe 72 eine elektrische Schaltung 75 ab, die radial außerhalb der Schulter 50 angeordnet ist. An der Abdeckkappe 72 ist ein zweites Bauteil 78 befestigt, das am maschinenseitigen Lagerring 46 anliegt. Die Abdeckkappe 72 und das zweite Bauteil 78 sind beide mit dem Gehäusedeckel 14 und damit mit der Nabe 54 drehfest verbunden. Zwischen der Welle 42 bzw. dem mit der Welle 42 drehfesten ersten Bauteil 69 und dem mit der Nabe 54 drehfesten zweiten Bauteil 78 ist ein Ringspalt 81 gebildet.

In Figur 2 ist der Ringspalt 81 und seine Umgebung näher dargestellt. Wie deutlich zu erkennen ist, ist der Ringspalt 81 zumindest teilweise mit einem pastosen Stoff 84 gefüllt. Bei diesem pastosen Stoff 84 handelt es sich insbesondere um Fett. Der Ringspalt 81 ist zumindest teilweise U-förmig. Der U-förmige Bereich 87 des Ringspalts 81 weist freie Schenkelenden 90, 91 auf, die radial zur Welle 42 nach innen gerichtet sind. Die beiden freien Schenkelenden 90, 91 des U-förmigen Bereichs 87 werden durch einen ringscheibenförmigen Kragen 93 voneinander getrennt. Der ringscheibenförmige Kragen 93 ist an das erste Bauteil 69 einstückig angeformt und dabei radial nach außen vorstehend. Der ringscheibenförmige Kragen 93 läuft dabei in eine Aussparung 96 der Nabe 54 bzw. dem mit der Abdeckkappe verbundenen zweiten Bauteil 78 ein. Die Nabe 54 ist durch das Wälzlager 34 gegenüber der Welle 42 drehbar gelagert. Das Wälzlager 34 weist eine radial ausgerichtete Dichtscheibe 99 auf, die den U-förmigen Bereich 87 des Ringspalts 81 teilweise begrenzt. Günstig ist, wenn der ringscheibenförmige Kragen 93 am ersten Bauteil 69 ausgebildet ist und dabei das erste Bauteil 69 als ein Distanzring 102 für den wellenseitigen Lagerring 38 des Wälzlagers 34 dient. Ebenso ist es günstig, wenn die Aussparung 96 in der vom zweiten Bauteil 78 gebildeten Abdeckkappe 72 angeordnet ist.

Wird die in Figur 1 dargestellte elektrische Maschine über die Riemenscheibe 66 angetrieben, so dreht sich der ringscheibenförmige Kragen 93 in der Aussparung 96 des zweiten Bauteils 78. Ist, wie zuvor beschrieben, in den Ringspalt 81 der pastose Stoff 84, beispielsweise Fett, eingebracht, so wird der pastose Stoff 84 durch die Reibung am ringscheibenförmigen Kragen 93 und die Drehgeschwindigkeit des Kragens 93 nach radial außen geschleudert. Dies hat zur Folge, daß sich der pastose Stoff 84 im U-förmigen Bereich 87, insbesondere in den außenliegenden Bereichen ansammelt. Je nach dem, wieviel Stoff 84 in den Ringspalt 81 eingebracht ist, ist der U-förmige Bereich 87 mehr oder weniger gefüllt. Bei einer maximalen Füllung sind beide freie Schenkel des U-förmigen Bereichs 87 gefüllt. Damit ist die Verbindung zwischen Wälzlager 34 und der Umgebung dicht geschlossen. Damit die Dichtwirkung im gefüllten Ringspalt 81 unter Wasserdruck erhalten bleibt, ist der pastose Stoff 84 derart auszuwählen, daß er einerseits eine gute Haftung sowohl am zweiten Bauteil 78 als auch am ersten Bauteil 69 hat und andererseits einen guten inneren Zusammenhalt aufweist. Eine gute Abstimmung dieser Stoffeigenschaften hat zum Vorteil, daß an die Ringspaltdichtung drückendes Wasser zumindest bei geringen Drücken nicht lagerseitig hinter den ringscheibenförmigen Kragen 93 eindringen kann.

## Patentansprüche

1. Elektrische Maschine, insbesondere Generator, mit einer Welle (42), mit einer Nabe (54) und mit einem Ringspalt (81), der zwischen der Welle (42) bzw. wenigstens einem mit der Welle (42) drehfest verbundenen ersten Bauteil (69) und der Nabe (54) bzw. wenigstens einem mit der Nabe (54) drehfesten zweiten Bauteil (78) gebildet ist, **wobei** der Ringspalt (81) zumindest teilweise mit einem pastosen Stoff (84), insbesondere Fett, gefüllt ist, **dadurch gekennzeichnet, daß** der Ringspalt (81) zumindest teilweise U-förmig ist und freie Schenkelenden (90, 91) eines U-förmigen Bereichs (87) des Ringspalts (81) nach radial innen gerichtet sind.

2. Elektrische Maschine nach Anspruch **1**, **dadurch gekennzeichnet, daß** das erste Bauteil (69) einen radial nach außen vorstehenden, ringscheibenförmigen Kragen (93) aufweist, der die freien Schenkelenden (90, 91) voneinander trennt.

3. Elektrische Maschine nach Anspruch 2, **dadurch gekennzeichnet, daß** der Kragen (93) in eine Aussparung (96) der Nabe (54) bzw. dem wenigstens einen zweiten Bauteil (78) greift.

4. Elektrische Maschine nach Anspruch 3, **dadurch gekennzeichnet, daß** die Nabe (54) über wenigstens ein Wälzlager (34) gegenüber der Welle (42) drehbar gelagert ist, wobei das Wälzlager (34) wenigstens eine Dichtscheibe (99) aufweist, die radial ausgerichtet ist.

5. Elektrische Maschine nach Anspruch 4, **dadurch gekennzeichnet, daß** der Kragen (93) am ersten Bauteil (69) ausgebildet ist, das als ein Distanzring (102) für einen wellenseitigen Lagerring (38) des Wälzlagers (34) dient.

6. Elektrische Maschine nach Anspruch 5, **dadurch gekennzeichnet, daß** die Aussparung (96) in einer vom zweiten Bauteil (78) gebildeten Abdeckkappe (72) angeordnet ist.

7. Elektrische Maschine nach Anspruch 6, **dadurch gekennzeichnet, daß** der U-förmige Bereich (87) des Ringspalts (81) teilweise von der Dichtscheibe (99) begrenzt ist.

8. Elektrische Maschine nach Anspruch 7, **dadurch gekennzeichnet, daß** die Abdeckkappe (72) zur Axialsicherung eines nabenseitigen Lagerrings (46) des Wälzlagers (34) dient.

## Claims

1. Electrical machine, in particular generator, having a shaft (42), having a spider (54) and having an annular gap (81), which is formed between the shaft (42) or at least one first component (69), which is connected to the shaft (42) such that it is fixed against rotation, and the spider (54) or at least one second component (78), which is fixed against rotation with the spider (54), the annular gap (81) being filled at least partially with a paste-like substance (84), in particular grease, **characterized in that** the annular gap (81) is at least partially U-shaped and free limb ends (90, 91) of a U-shaped region (87) of the annular gap (81) are directed radially inwards.

2. Electrical machine according to Claim 1, **characterized in that** the first component (69) has a radially outwardly protruding collar (93), which is in the form of an annular disc and separates the free limb ends (90, 91) from one another.

3. Electrical machine according to Claim 2, **characterized in that** the collar (93) engages in a cutout (96) in the spider (54) or the at least one second component (78).

4. Electrical machine according to Claim 3, **characterized in that** the spider (54) is mounted such that it can rotate with respect to the shaft (42) via at least one rolling-contact bearing (34), the rolling-contact bearing (34) having at least one sealing washer (99), which is aligned radially.

5. Electrical machine according to Claim 4, **characterized in that** the collar (93) is formed on the first component (69), which acts as a distancing ring (102) for a shaft-side bearing ring (38) of the rolling-contact bearing (34).

6. Electrical machine according to Claim 5, **characterized in that** the cutout (96) is arranged in a cover cap (72) formed by the second component (78).

7. Electrical machine according to Claim 6, **characterized in that** the U-shaped region (87) of the annular gap (81) is partially delimited by the sealing washer (99).

8. Electrical machine according to Claim 7, **characterized in that** the cover cap (72) is used for axially securing a spider-side bearing ring (46) of the rolling-contact bearing (34).

## Revendications

1. Machine électrique, notamment générateur, comprenant un arbre (42), un moyeu (54) et une fente annulaire (81) formée entre l'arbre (42) ou au moins un premier composant (69) solidaire de l'arbre (42) et le moyeu (54) ou au moins un second composant (78) solidaire du moyeu (54), la fente annulaire (81) étant remplie au moins en partie par une matière pâteuse (84), en particulier de la graisse,
**caractérisée en ce que**
la fente annulaire (81) présente au moins en partie une forme de U, et une zone (87) en forme de U de cette fente (81) a des extrémités libres de branche (90, 91) dirigées radialement vers l'intérieur.

2. Machine électrique selon la revendication 1,
**caractérisée en ce que**
le premier composant (69) présente un collet (93) en forme d'anneau faisant saillie radialement vers l'extérieur, et qui sépare l'une de l'autre les extrémités de branche (90, 91) libres.

3. Machine électrique selon la revendication 2,
**caractérisée en ce que**
le collet (93) est engagé dans un évidement (96) du moyeu (54) et dans au moins un second composant (78).

4. Machine électrique selon la revendication 3,
**caractérisée en ce que**
le moyeu (54) est monté en rotation par rapport à l'arbre (42) par l'intermédiaire d'au moins un palier à roulement (34) qui présente au moins une rondelle d'étanchéité (99) dirigé radialement.

5. Machine électrique selon la revendication 4,
**caractérisée en ce que**
le collet (93) est réalisé sur le premier composant (69) qui sert de bague d'espacement (102) pour une bague de palier (38) du palier de roulement (34) située du côté de l'arbre.

6. Machine électrique selon la revendication 5,
**caractérisée en ce que**
l'évidement (96) est disposé dans un capot de couverture (72) constitué par un second composant (78).

7. Machine électrique selon la revendication 6,
**caractérisée en ce que**
la zone en forme de U (87) de la fente annulaire (81) est délimitée au moins en partie par la rondelle d'étanchéité (99).

8. Machine électrique selon la revendication 7,
**caractérisée en ce que**
le capot de couverture (72) sert à sécuriser axialement une bague (46) du palier à roulement (34) située du côté du moyeu.
